(19) Europäisches Patentamt
European Patent Office
Office européen des brevets

(11) **EP 4 769 536 A1**

(12) **EUROPEAN PATENT APPLICATION**
published in accordance with Art. 153(4) EPC

(43) Date of publication:
01.07.2026 Bulletin 2026/27

(21) Application number: 25738964.3

(22) Date of filing: 08.01.2025

(51) International Patent Classification (IPC):
H01M 4/136 (2010.01)     H01M 4/131 (2010.01)
H01M 4/36 (2006.01)      H01M 4/58 (2010.01)
H01M 4/525 (2010.01)     H01M 4/505 (2010.01)
H01M 4/1397 (2010.01)    H01M 4/1391 (2010.01)
H01M 10/052 (2010.01)

(52) Cooperative Patent Classification (CPC):
H01M 4/131; H01M 4/136; H01M 4/1391;
H01M 4/1397; H01M 4/36; H01M 4/505;
H01M 4/525; H01M 4/58; H01M 10/052;
Y02E 60/10

(86) International application number:
PCT/KR2025/000435

(87) International publication number:
WO 2025/150891 (17.07.2025 Gazette 2025/29)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.01.2024 KR 20240003889

(71) Applicant: LG Energy Solution, Ltd.
Seoul 07335 (KR)

(72) Inventors:
• KIM, Dong Hwi
  Daejeon 34122 (KR)
• JEON, Hye Lim
  Daejeon 34122 (KR)
• CHA, Sun Young
  Daejeon 34122 (KR)
• LEE, Su Yeong
  Daejeon 34122 (KR)
• KIM, Ji Yun
  Daejeon 34122 (KR)

(74) Representative: Hoffmann Eitle
Patent- und Rechtsanwälte PartmbB
Arabellastraße 30
81925 München (DE)

(54) **POSITIVE ELECTRODE AND MANUFACTURING METHOD THEREOF**

(57) A positive electrode may include both a first positive electrode active material having an olivine crystal structure and a second positive electrode active material having a layered crystal structure in the positive electrode active layer, resulting in high safety and excellent charge/discharge capacity of the positive electrode. In addition, the positive electrode may have the advantage of excellent energy density and output, which may be a result of including a first positive electrode active material represented by a chemical formula as defined in the specification and which includes three or more metals in addition to lithium.

[FIG. 1]

**Description**

[Technical Field]

The present disclosure relates to a positive electrode and a method for manufacturing the same.
This application claims the benefit of priority from Korean Patent Application No. 10-2024-0003889, filed on January 10, 2024, the entire contents disclosed therein are incorporated by reference into this disclosure.

[Background]

Recently, secondary batteries have been widely applied not only to small devices such as portable electronic devices, but also to medium and large-sized devices such as battery packs for hybrid vehicles or electric vehicles, or power storage devices. In particular, as interest in environmental issues has increased recently, much research is being conducted on electric vehicles, hybrid electric vehicles, etc. that can replace vehicles using fossil fuel such as gasoline vehicles, diesel vehicles, etc. which are one of the major causes of air pollution.
Generally, lithium secondary batteries have a structure in which an electrode assembly comprising a positive electrode, a negative electrode, and a separator is impregnated with a lithium electrolyte. In this case, each electrode is manufactured by coating an electrode slurry on a current collector. The electrode slurry is prepared by mixing an electrode active material for storing energy, a conductive material for providing electrical conductivity, and a binder for adhering them to the current collector and providing binding force between them in a solvent such as NMP (N-methyl pyrrolidone), etc.
The positive electrode includes a metal oxide, such as LCO ($LiCoO_2$), LMO ($LiMn_2O_4$), LFP ($LiFePO_4$), or NCM ($LiNi_{1/3}Co_{1/3}Mn_{1/3}O_2$), as a positive electrode active material capable of reversibly intercalating and deintercalating lithium.
Among these, compounds with a layered crystal structure, such as NCM-based compounds, LCO-based compounds, and NCA-based compounds are well-suited for lithium-ion storage and exhibit high lithium-ion diffusion rates, making them applicable as positive electrode active materials in high-capacity and high-power secondary batteries. However, compounds with a layered crystal structure have low chemical and structural stability, which can easily lead to decomposition under high temperature conditions. This reduces the safety of secondary batteries.
On the other hand, LFP-based compounds with an olivine crystal structure exhibit high structural stability with a hexagonal crystalline form in which phosphorus (P) and oxygen (O) are strongly bonded. Therefore, compounds with an olivine crystalline structure can easily maintain their crystal structure even if all lithium ions are deintercalated during charging, and the decomposition of the crystalline structure does not easily occur even under high-temperature conditions.
However, compounds with an olivine crystal structure have low energy density which represents the amount of energy that a battery can store per unit weight/volume. Therefore, for compounds with an olivine crystal structure to achieve high energy density, it is necessary to increase the weight/volume of the positive electrode active material, thus leading to an excessive increase in the size or weight of the secondary battery. In addition, LFP-based compounds have limitations with substantially restricted charge/discharge performance due to low ion diffusion and electrical conductivity.
Accordingly, positive electrode active materials in the form of including a metal such as manganese, etc. have been developed to increase the energy density of conventional LFP-based compounds with an olivine crystal structure. The positive electrode active materials have a structure in which manganese is partially substituted at the position where iron atoms are located, achieving an effect of improving the energy density of iron phosphate by about 5% or more. However, despite such effects, additional energy density expression of LFP-based compounds applied to medium and large-sized secondary batteries is required.
Therefore, there is a demand for technology development of positive electrode active materials for lithium secondary batteries and positive electrodes including the same that can achieve high energy density and charge/-discharge performance including output and lifespan, while incorporating LFP-based compounds with an olivine structure as positive electrode active materials to implement high safety of lithium secondary batteries.

[Related Art Document]

[Patent Document]

Korean Patent Application Publication No. 10-2013-0136796
Korean Patent Application Publication No. 10-2016-0111213

[Summary]

[Technical Problem]

Accordingly, an object of the present disclosure is to provide a positive electrode active material for a lithium secondary battery and a positive electrode including the same that can implement high energy density and charge/-discharge performance while including an LFP-based compound with an olivine structure as a positive electrode active material in order to implement high safety.

[Technical Solution]

To solve the problems described above,
the present disclosure provides a positive electrode comprising:

a positive electrode current collector, and
a positive electrode active layer provided on at least one side of the positive electrode current collector and includes a first positive electrode active material represented by the following Chemical Formula 1 and a second positive electrode active material represented by the following Chemical Formula 2:

[Chemical Formula 1]     $Li_{1+a}Mn_{1-b-c}Fe_bM^1_cPO_4$

[Chemical Formula 2]     $Li_pNi_qCo_rMn_tM^2_wO_2$

in the above Chemical Formula 1 and Chemical Formula 2,
$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$,
$M^2$ is one or more of W, Cu, Fe, V, Cr, Ti, Zr, Zn, Al, In, Ta, Y, La, Sr, Ga, Sc, Gd, Sm, Ca, Ce, Nb, Mg, B, or Mo; and p, q, r, t, and w are $1.0 \leq p \leq 1.30$, $0 < q \leq 0.9$, $0 < r \leq 0.3$, $0 \leq t \leq 0.3$, and $0 \leq w \leq 0.2$, respectively, provided that q+r+t+w=1.

In this case, the compound represented by the Chemical Formula 1 may include one or more of the compounds represented by the following Chemical Formula 3 to Chemical Formula 6:

[Chemical Formula 3]     $Li_{1+a}Mn_{1-b-x}Fe_bTi_xPO_4$

[Chemical Formula 4]     $Li_{1+a}Mn_{1-b-x-y}Fe_bTi_xV_yPO_4$

[Chemical Formula 5]     $Li_{1+a}Mn_{1-b-x-y-z}Fe_bTi_xV_yNb_zPO_4$

[Chemical Formula 6]     $Li_{1+a}Mn_{1-b-x-y-z}Fe_bTi_xZr_yNb_zPO_4$

in the above Chemical Formula 3 to Chemical Formula 6,
a, b, x, y, and z are $-0.5 \leq a \leq 0.5$, $0.1 \leq b \leq 0.8$, $0 < x \leq 0.2$, $0 < y \leq 0.1$, $0 < z \leq 0.1$, provided that $0.001 \leq x+y \leq 0.2$ or $0.001 \leq x+y+z \leq 0.2$.

In addition, the first positive electrode active material may have a lattice constant c of 4.69165 Å to 4.80 Å when analyzed by X-ray diffraction, and satisfy the following Equation 1:

$$[\text{Equation 1}]$$

$$y = -px + q$$

in the above Equation 1,

y represents the lattice constant c,

x represents $\sqrt{a^2 + b^2}$, wherein the a and b are lattice constants a and b, respectively,

p and q are $-0.08 \leq p \leq -0.07$ and $5 \leq q \leq 6$, respectively.

Moreover, the first positive electrode active material may have an average particle diameter ($D_{50}$) of 0.5 μm to 10 μm.

In addition, the first positive electrode active material may have a structure with a carbon layer coated on the surface, wherein the average thickness of the carbon layer may be 50 nm or less.

Further, the positive electrode active layer may include a first positive electrode active layer in contact with the positive electrode current collector, and a second positive electrode active layer provided on the first positive electrode active layer.

In this case, the first positive electrode active material may be included in any one or more of the first positive electrode active layer or the second positive electrode active layer.

In addition, when the first positive electrode active material is included in the first positive electrode active layer and the second positive electrode active layer, a content included in the first positive electrode active layer may be greater than a content included in the second positive electrode active layer.

Furthermore, the present disclosure provides a method for manufacturing the positive electrode, comprising:

coating at least one side of a positive electrode current collector with a positive electrode slurry, and
drying the coated positive electrode slurry to form a positive electrode active layer;
wherein the positive electrode slurry includes a first positive electrode active material represented by the following Chemical Formula 1 and a second positive electrode active material represented by the following Chemical Formula 2:

[Chemical Formula 1] $\qquad Li_{1+a}Mn_{1-b-c}Fe_bM^1_cPO_4$

[Chemical Formula 2] $\qquad Li_pNi_qCo_rMn_tM^2_wO_2$

in the above Chemical Formula 1 and Chemical Formula 2,
$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$,
$M^2$ is one or more of W, Cu, Fe, V, Cr, Ti, Zr, Zn, Al, In, Ta, Y, La, Sr, Ga, Sc, Gd, Sm, Ca, Ce, Nb, Mg, B, or Mo; and
p, q, r, t, and w are $1.0 \leq p \leq 1.30$, $0 < q \leq 0.9$, $0 < r \leq 0.3$, $0 \leq t \leq 0.3$, and $0 \leq w \leq 0.2$, respectively, provided that $q+r+t+w=1$.

Here, the first positive electrode active material may be prepared by a step of calcining a mixture of lithium manganese iron phosphate represented by the following Chemical Formula 7 and a metal precursor compound at a temperature of 500°C or higher:

[Chemical Formula 7] $\qquad Li_{1+m}Mn_{1-n}Fe_nPO_4$

in the above Chemical Formula 7,
m and n are $-0.5 \leq m \leq 0.5$, $0.1 \leq n \leq 0.8$.

In addition, the lithium manganese iron phosphate represented by the above Chemical Formula 7 may be heat-treated at 500°C to 900°C before being mixed with the metal precursor compound.

Moreover, the first positive electrode active material has a structure in which a carbon layer is coated on the surface, and the carbon layer may be formed by chemical vapor deposition (CVD) under inactive gas conditions.

The chemical vapor deposition (CVD) may use, as a carbon source, one or more of a carbon structure including a dot-shaped carbon compound and a linear carbon compound or one or more polymer compounds.

Furthermore, the present disclosure provides an electrode assembly including the positive electrode according to the present disclosure described above, a negative electrode, and a separator provided between the positive electrode and the negative electrode.

[Advantageous Effects]

The positive electrode according to the present disclosure includes a first positive electrode active material with an olivine crystal structure and a second positive electrode active material with a layered crystal structure, providing high safety and excellent charge/discharge capacity of the positive electrode. In addition, the positive electrode includes the first positive electrode active material represented by Chemical Formula 1, which contains three or more metals in addition to lithium, and thus has the advantages of excellent energy density and output.

[Brief Description of the Drawings]

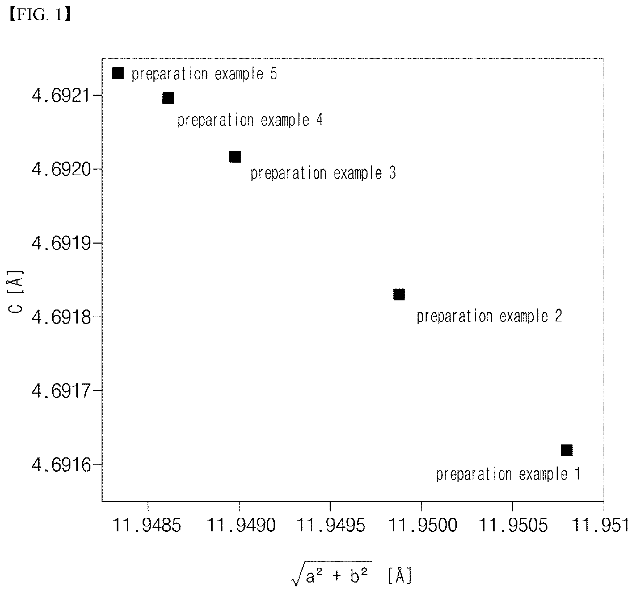

FIG. 1 is a graph showing the correlation between the lattice constant c and lattice constants a and b of a positive electrode active material in X-ray diffraction (XRD) analysis.

[Detailed Description]

The present disclosure may have various modifications and various aspects, and specific aspects will be described in detail in the following detailed description.

However, it should be understood that the present disclosure is not limited to the specific aspects, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present specification, "average particle diameter ($D_{50}$)" refers to the particle diameter at which the cumulative value in the particle diameter distribution becomes 50%, and this is also called the median diameter. The average particle diameter can be measured by a method commonly applied in the art. For example, the average particle diameter can be measured using an analyzer such as a particle size analyzer or an analyzer using laser diffraction scattering particle size distribution measurement method, but is not limited thereto.

Hereinafter, the present disclosure will be described in more detail.

**Positive electrode**

The present disclosure provides a positive electrode comprising:

a positive electrode current collector, and
a positive electrode active layer provided on at least one side of the positive electrode current collector and including a positive electrode active material according to the present disclosure.

The positive electrode according to the present disclosure may refer to a positive electrode for a lithium secondary battery. The positive electrode includes a positive electrode active layer provided on at least one side of the positive electrode current collector. Here, the positive electrode active layer is a layer that implements the electrical activity of the positive electrode, and includes as a main component a positive electrode active material that implements an electrochemical oxidation-reduction reaction during charging and discharging of the battery. Specifically, the positive electrode active material may comprise from 80 parts by weight to 99.8 parts by weight of the total weight of the positive electrode active layer, and more specifically, it may include 95 parts by weight or more, 98 parts by weight or more, 84 parts by weight to 99.8 parts by weight, 90 parts by weight to 99.8 parts by weight, 94 parts by weight to 99.8 parts by weight, 88 parts by weight to 96 parts by weight, or 92 parts by weight to 97.5 parts by weight.

The positive electrode active layer includes a first positive electrode active material and a second positive electrode active material as positive electrode active materials, which contain metal oxides with different crystal structures. Specifically, the first positive electrode active material and the second positive electrode active material include a compound with an olivine structure represented by the following Chemical Formula 1 and a compound with a layered structure represented by the following Chemical Formula 2, respectively:

[Chemical Formula 1] $\qquad$ $Li_{1+a}Mn_{1-b-c}Fe_bM^1{}_cPO_4$

[Chemical Formula 2] $\qquad$ $Li_pNi_qCo_rMn_tM^2{}_wO_2$

in the above Chemical Formula 1 and Chemical Formula 2,

$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$,
$M^2$ is one or more of W, Cu, Fe, V, Cr, Ti, Zr, Zn, Al, In, Ta, Y, La, Sr, Ga, Sc, Gd, Sm, Ca, Ce, Nb, Mg, B, or Mo; and
p, q, r, t, and w are $1.0 \leq p \leq 1.30$, $0 < q \leq 0.9$, $0 < r < 0.3$, $0 \leq t \leq 0.3$, and $0 \leq w \leq 0.2$, respectively, provided that $q+r+t+w=1$.

Generally, the compounds represented by the above Chemical Formula 1 and Chemical Formula 2 are used as positive electrode active materials for lithium secondary batteries.

Among these, the compound represented by Chemical Formula 2 is a lithium composite metal oxide with a layered crystal structure, which is well-suited for lithium-ion storage and exhibits high lithium-ion diffusion rates, making it applicable as a positive electrode active material in high-capacity and high-power secondary batteries. However, compounds with a layered crystal structure have low chemical and structural stability, which can easily lead to decomposition under high temperature conditions. This reduces the safety of secondary batteries.

On the other hand, lithium manganese iron phosphate with an olivine crystal structure represented by Chemical Formula 1 exhibits high structural stability with a hexagonal crystal form in which phosphorus (P) and oxygen (O) are strongly bonded. Therefore, compounds with an olivine crystal structure can easily maintain their crystal structure even if lithium ions are completely deintercalated during charging, and the decomposition of the crystal structure does not easily occur even under high temperature conditions. However, compounds with an olivine crystal structure have low energy density, which represents the amount of energy that a battery can store per unit weight/volume. Therefore, there is a limitation in that the size or weight of the secondary battery should be excessively increased to implement high energy density with compounds having an olivine crystal structure.

Accordingly, the present disclosure includes a first positive electrode active material with an olivine structure and a second positive electrode active material with a layered structure in the positive electrode active layer. This allows for enhancing the safety and electrical performance of the positive electrode by complementing or mitigating the limitations of metal oxides with different crystal structures.

Here, the lithium composite metal oxide with a layered structure represented by Chemical Formula 2 is a metal oxide containing lithium along with nickel (Ni), cobalt (Co), and manganese (Mn), which may have a form in which other transition metals ($M^2$) are doped depending on the case. For example, the lithium composite metal oxide may include one or more of $Li(Ni_{0.6}Co_{0.2}Mn_{0.2})O_2$, $Li(Ni_{0.7}Co_{0.15}Mn_{0.15})O_2$, $Li(Ni_{0.8}Co_{0.1}Mn_{0.1})O_2$, $Li(Ni_{0.9}Co_{0.05}Mn_{0.05})O_2$, $Li(Ni_{0.6}Co_{0.2}Mn_{0.1}Zr_{0.1})O_2$, $Li(Ni_{0.6}Co_{0.2}Mn_{0.15}Zr_{0.05})O_2$, $Li(Ni_{0.7}Co_{0.1}Mn_{0.1}Zr_{0.1})O_2$, $Li(Ni_{0.6}Co_{0.2}Al_{0.2})O_2$, $Li(Ni_{0.7}Co_{0.15}Al_{0.15})O_2$, $Li(Ni_{0.8}Co_{0.1}Al_{0.1})O_2$, $Li(Ni_{0.9}Co_{0.05}Al_{0.05})O_2$, $Li(Ni_{0.6}Co_{0.2}Al_{0.1}Zr_{0.1})O_2$, $Li(Ni_{0.6}Co_{0.2}Al_{0.15}Zr_{0.05})O_2$, or $Li(Ni_{0.7}Co_{0.1}Al_{0.1}Zr_{0.1})O_2$.

The second positive electrode active material including the lithium composite metal oxide has high charge/discharge capacity, and when doped with transition metals ($M^2$), the structural stability is further improved, resulting in enhanced safety at high temperatures. In particular, compounds such as $Li(Ni_{0.6}Co_{0.1}Mn_{0.3})O_2$ (i.e., $0.5 \leq q \leq 0.7$, $0.05 \leq r \leq 0.15$, $0.2 \leq t \leq 0.3$) have the advantage of improving the lifespan characteristics and output characteristics of secondary batteries under high voltage conditions when mixed with the first positive electrode active material.

In addition, the lithium manganese iron phosphate represented by Chemical Formula 1 can implement high energy density with a certain mole fraction by having one or more metals ($M^1$) doped and/or substituted in lithium manganese iron phosphate ($LiMn_{1-b}Fe_bPO_4$). More specifically, the positive electrode active material according to the present disclosure may have a structure in which one or more of titanium (Ti), vanadium (V), zirconium (Zr), or niobium (Nb) are doped and/or substituted in lithium manganese iron phosphate.

As an example, the lithium manganese iron phosphate may include one or more of the compounds represented by the following Chemical Formula 3 to Chemical Formula 6:

[Chemical Formula 3] $\quad Li_{1+a}Mn_{1-b-x}Fe_bTi_xPO_4$

[Chemical Formula 4] $\quad Li_{1+a}Mn_{1-b-x-y}Fe_bTi_xV_yPO_4$

[Chemical Formula 5] $\quad Li_{1+a}Mn_{1-b-x-y-z}Fe_bTi_xV_yNb_zPO_4$

[Chemical Formula 6] $\quad Li_{1+a}Mn_{1-b-x-y-z}Fe_bTi_xZr_yNb_zPO_4$

in the above Chemical Formula 3 to Chemical Formula 6,
a, b, x, y, and z are $-0.5 \leq a \leq 0.5$, $0.1 \leq b \leq 0.8$, $0 < x \leq 0.2$, $0 < y \leq 0.1$, $0 < z \leq 0.1$, provided that $0.001 \leq x+y \leq 0.2$ or $0.001 \leq x+y+z \leq 0.2$.

The compounds represented by the above Chemical Formula 3 to Chemical Formula 6 are lithium manganese iron phosphate ($LiMn_{1-b}Fe_bPO_4$) doped or substituted with titanium (Ti), vanadium (V), zirconium (Zr), and/or niobium (Nb). At this time, the metals that are doped or substituted can be doped or substituted at 0.1 mole fraction or less based on the total 1 mole fraction of metals excluding lithium (Li), and the ratio (Li/Me) of lithium (Li) to these metals (Me) can be 1.01 to 1.50, specifically 1.01 to 1.30; 1.01 to 1.20; or 1.01 to 1.15. The concentration of lithium (Li) in the positive electrode active material is closely related to the density of the particles. Specifically, higher lithium concentration results in higher density, and in this case, a high rolling density can be achieved because it is easy to remove voids in the particles. However, excessively high lithium concentration can reduce electrical performance by decreasing the movement of lithium ions. In addition, significantly low lithium concentration not only has low particle density resulting in low rolling density, but also has a problem of low energy density per unit volume/mass when manufacturing the positive electrode. The present disclosure can overcome these problems by adjusting the ratio (Li/Me) of lithium (Li) to metal (Me) included in the positive electrode active material to the range described above.

For example, the first positive electrode active materials include one or more of the compounds $LiMn_{0.8}Fe_{0.19}Ti_{0.01}PO_4$, $LiMn_{0.7}Fe_{0.29}Ti_{0.01}PO_4$, $LiMn_{0.6}Fe_{0.39}Ti_{0.01}PO_4$, $LiMn_{0.8}Fe_{0.17}Ti_{0.03}PO_4$, $LiMn_{0.7}Fe_{0.27}Ti_{0.03}PO_4$, $LiMn_{0.6}Fe_{0.37}Ti_{0.03}PO_4$, $LiMn_{0.8}Fe_{0.15}Ti_{0.05}PO_4$, $LiMn_{0.7}Fe_{0.25}Ti_{0.05}PO_4$, $LiMn_{0.6}Fe_{0.35}Ti_{0.05}PO_4$, and the like compounds represented by the Chemical Formula 3; $LiMn_{0.8}Fe_{0.18}Ti_{0.01}V_{0.01}PO_4$,

$LiMn_{0.7}Fe_{0.28}Ti_{0.01}V_{0.01}PO_4$, $LiMn_{0.6}Fe_{0.38}Ti_{0.01}V_{0.01}PO_4$, $LiMn_{0.8}Fe_{0.15}Ti_{0.025}V_{0.025}PO_4$, $LiMn_{0.7}Fe_{0.25}Ti_{0.025}V_{0.025}PO_4$, $LiMn_{0.6}Fe_{0.35}Ti_{0.025}V_{0.025}PO_4$, $LiMn_{0.8}Fe_{0.1}Ti_{0.05}V_{0.05}PO_4$, $LiMn_{0.7}Fe_{0.2}Ti_{0.05}V_{0.05}PO_4$, $LiMn_{0.6}Fe_{0.3}Ti_{0.05}V_{0.05}PO_4$, and the like compounds represented by the Chemical Formula 4; $LiMn_{0.8}Fe_{0.17}Ti_{0.01}V_{0.01}Nb_{0.01}PO_4$, $LiMn_{0.7}Fe_{0.27}Ti_{0.01}V_{0.01}Nb_{0.01}PO_4$, $LiMn_{0.6}Fe_{0.37}Ti_{0.01}V_{0.01}Nb_{0.01}PO_4$, $LiMn_{0.8}Fe_{0.12}Ti_{0.03}V_{0.025}Nb_{0.025}PO_4$, $LiMn_{0.7}Fe_{0.22}Ti_{0.03}V_{0.025}Nb_{0.025}PO_4$, $LiMn_{0.6}Fe_{0.32}Ti_{0.03}V_{0.025}Nb_{0.025}PO_4$, $LiMn_{0.8}Fe_{0.05}Ti_{0.05}V_{0.05}Nb_{0.05}PO_4$, $LiMn_{0.7}Fe_{0.15}Ti_{0.05}V_{0.05}Nb_{0.05}PO_4$, $LiMn_{0.6}Fe_{0.25}Ti_{0.05}V_{0.05}Nb_{0.05}PO_4$, and the like compounds represented by the Chemical Formula 5; and $LiMn_{0.8}Fe_{0.17}Ti_{0.01}Zr_{0.01}Nb_{0.01}PO_4$, $LiMn_{0.7}Fe_{0.27}Ti_{0.01}Zr_{0.01}Nb_{0.01}PO_4$, $LiMn_{0.6}Fe_{0.37}Ti_{0.01}Zr_{0.01}Nb_{0.01}PO_4$, $LiMn_{0.8}Fe_{0.12}Ti_{0.03}Z_{0.025}Nb_{0.025}PO_4$, $LiMn_{0.7}Fe_{0.22}Ti_{0.03}Zr_{0.025}Nb_{0.025}PO_4$, $LiMn_{0.6}Fe_{0.32}Ti_{0.03}Zr_{0.025}Nb_{0.025}PO_4$, $LiMn_{0.8}Fe_{0.05}Ti_{0.05}Zr_{0.05}Nb_{0.05}PO_4$, $LiMn_{0.7}Fe_{0.15}Ti_{0.05}Zr_{0.05}Nb_{0.05}PO_4$, $LiMn_{0.6}Fe_{0.25}Ti_{0.05}Zr_{0.05}Nb_{0.05}PO_4$, and the like compounds represented by the Chemical Formula 6.

The first positive electrode active material has a form in which one or more of titanium (Ti), vanadium (V), zirconium (Zr), or niobium (Nb) are doped and/or substituted in lithium manganese iron phosphate, thereby allowing the size of the positive electrode active material to meet a predetermined condition according to the number and/or mole fraction of the doped and/or substituted metals. The first positive electrode active material includes lithium manganese iron phosphate with one or more metals doped and/or substituted, which can have a smaller size compared to lithium iron phosphate ($LiFePO_4$) or lithium manganese iron phosphate ($LiMn_{1-b}Fe_bPO_4$). Accordingly, the first positive electrode active material has a larger specific surface area, resulting in higher charge/discharge efficiency and lifespan characteristics during charging and discharging of the secondary battery.

In the present disclosure, a "particle" refers to a micrometer-sized grain, which, when observed under magnification, can be distinguished as "grains" with crystalline structures of several tens of nanometers. When these grains are further magnified, a unit area (i.e., crystal lattice) where atoms form a lattice structure in a certain direction can be identified, which is called a "crystallite." The first positive electrode active material according to the present disclosure has a form in which one or more of titanium (Ti), vanadium (V), zirconium (Zr), or niobium (Nb) are doped and/or substituted in lithium manganese iron phosphate, so that the size of the crystallite and/or the size of the particle can be controlled to satisfy a predetermined range.

For example, as the type or mole fraction of the metal being doped or substituted increases, the lattice constant c of the lithium manganese iron phosphate constituting the first positive electrode active material can increase, and the grain of the first positive electrode active material may decrease in size. Here, the crystallite size of the positive electrode active material can be measured in the form of lattice constants a, b, c, etc., which each represent the length of a side of the crystallite upon X-ray spectroscopic analysis.

More specifically, the first positive electrode active material according to the present disclosure may be doped or substituted with titanium (Ti), vanadium (V), zirconium (Zr), niobium (Nb), or the like along with manganese (Mn), and may have a lattice constant c greater than about 4.6916 Å of lithium manganese iron phosphate($LiMn_{1-b}Fe_bPO_4$), which does not include any of the above transition metals. For example, the positive electrode active material may have a lattice constant c of 4.69165 Å to 4.80 Å upon X-ray diffraction analysis. More specifically, the positive electrode active material may have a lattice constant c of 4.69165 Å to 4.80 Å; 4.69165 Å to 4.75 Å; 4.69165 Å to 4.70 Å; 4.69165 Å to 4.695 Å; 4.69165 Å to 4.694 Å; 4.69165 Å to 4.693 Å; 4.6917 Å to 4.6925 Å; or 4.6918 Å to 4.6925 Å.

The "lattice constant" is a value representing the edge length of a crystallite, used to describe the size and arrangement of a material, and can be expressed in various forms depending on the crystalline structure. In the case of an olivine structure, it has an orthorhombic crystal structure, and accordingly, it can have lattice constants a, b, and c. Among these, the lattice constant c is a factor representing the unit cell size in the c-axis direction of the crystal, which is closely related to the structural and chemical properties of the crystallite. For example, in the case of lithium manganese iron phosphate ($LiMn_{1-b}Fe_bPO_4$) with an olivine structure, the c-axis direction can act as the main transport path for lithium ion movement. The lattice constant c, which represents the size in the c-axis direction, can increase when ions with larger ionic radii than $Fe^{2+}$ and $Mn^{2+}$, such as $Ti^{4+}$, $V^{5+}$, $Nb^{5+}$, etc., are doped. The increase in lattice constant c can expand the lithium ion path, increasing the diffusion coefficient of lithium ions. Therefore, the positive electrode active material according to the present disclosure can have excellent electrical performance in the range of the lattice constant c described above. However, when the upper limit value of the above range is exceeded, a secondary phase may form inside the olivine structure. When a secondary phase is formed inside the olivine structure, the electrochemical activity may rather be reduced. In addition, when the lower limit value of the above range is below, the electrical performance of the positive electrode active material may be significantly reduced.

Here, when the lattice constant c is expressed with respect to the lattice constants a and b, the first positive electrode active material may show a linear relationship, which may follow Vegard's law. Specifically, the lattice constant c of the first positive electrode active material may have a predetermined correlation with the square root of the sum of the squares of lattice constant a and lattice constant b, and such correlation can be expressed by the following Equation 1:

[Equation 1]

$$y = -px + q$$

in the above Equation 1,

y represents the lattice constant c,

x represents $\sqrt{a^2 + b^2}$, wherein the a and b are lattice constants a and b, respectively,

p and q are $-0.08 \leq p \leq -0.07$ and $5 \leq q \leq 6$, respectively.

The above Equation 1 represents the correlation between lattice constants a and b and lattice constant c of the lithium manganese iron phosphate represented by Chemical Formula 1, where a, b, and c may be measurement values according to X-ray spectroscopic analysis. The lattice constants a, b, and c and their correlation may vary depending not only on the type or mole fraction of the metal being doped and/or substituted, but also on the manufacturing method or process conditions of the lithium manganese iron phosphate. In the case of the present disclosure, as shown in FIG. 1, it shows a tendency to increase as the number or mole fraction of metals doped and/or substituted in lithium manganese iron phosphate increases. In other words, the first positive electrode active material of the present disclosure satisfies the range of lattice constant c described above, and shows a tendency for the lattice constant c to increase as the number or mole fraction of the metal ($M^1$) doped and/or substituted in lithium manganese iron phosphate ($LiMn_{1-b}Fe_bPO_4$) increases, thus may satisfy the above Equation 1. The fact that the lattice constant c shows a linear relationship when expressed with respect to the lattice constants a and b means that the olivine crystalline structure can be maintained even if multiple components (e.g., Ti, V, Zr, Sr, Sb, B, Nb, etc.) are doped or substituted in lithium manganese iron phosphate ($LiMn_{1-b}Fe_bPO_4$). In other words, it indirectly indicates that the structural stability of the positive electrode active material according to the present disclosure remains high even when a plurality of components is doped or substituted.

In addition, the grain of the first positive electrode active material formed by such lattice units can be identified for size through the X-axis size upon X-ray diffraction analysis. The size of the grain may be about 70 nm or more and less than 120 nm. More specifically, the size of the grain may be about 70 nm to 115 nm; about 70 nm to 105 nm; about 70 nm to 99 nm; about 70 nm to 95 nm; or about 80 nm to 99 nm. The positive electrode active material according to the present disclosure can increase the specific surface area of the grains while minimizing agglomeration between particles by controlling the grain size to the range described above. Through this, the positive electrode active material can implement high electrical performance. Moreover, the positive electrode active material has the characteristic of high rolling density since it is advantageous to form a dense structure due to pressure during rolling by including grains having the range described above. In addition, since the grains having the above size range can uniformly distribute pressure during rolling, the positive electrode active material including them can uniformly implement rolling density across the active layer. Meanwhile, the grain is a particle formed by aggregated crystallites, and generally, as the size of the crystallite increases, the size of the grain may increase. However, in the case where a plurality of components is doped or substituted, such as the positive electrode active material according to the present disclosure, interference effects within the lattice thereof may occur. In this case, structural changes in the crystallite boundaries may be caused or the crystallite boundaries may increase, and thus the tendency of crystallite size increases to increase the grain size may not appear.

In addition, the first positive electrode active material may have a certain size. For example, the first positive electrode active material may have an average particle diameter ($D_{50}$) of 0.5 μm to 10 μm, and specifically, it may be 0.5 μm to 8 μm; 0.5 μm to 6 μm; 0.5 μm to 4 μm; 0.5 μm to 2 μm; 1 μm to 5 μm; 2 μm to 4 μm; 4 μm to 8 μm; 5 μm to 9 μm; 3 μm to 6 μm; 0.5 μm to 1.5 μm; or 0.7 μm to 1.4 μm.

The present disclosure can prevent the agglomeration of positive electrode active materials due to particle diameters lower than the lower limit value of the range, which would reduce the processability during positive electrode manufacturing and lower the reliability of the positive electrode, by adjusting the average particle diameter ($D_{50}$) of the first positive electrode active material to the range described above. Additionally, there is a problem of deterioration in electrical performance due to damage to the positive electrode active material, such as breakage in the rolling process, because of particle diameters higher than the upper limit value of the range.

Moreover, the first positive electrode active material may have a structure in which a carbon layer is coated on the surface. The carbon layer may have a porous structure with a high surface area as well as a form that uniformly surrounds the core surface with high crystallinity. A carbon layer with this structure can further enhance the electrochemical reactivity and electrical properties of the positive electrode active material, thereby improving the output and lifespan characteristics of the positive electrode active material.

Here, the carbon layer can be adjusted in thickness within a range that does not reduce the energy density of the positive electrode active material. Specifically, the carbon layer can have an average thickness of 50 nm or less, and more specifically, 40 nm or less; 30 nm or less; 20 nm or less; 10 nm or less; 5 nm to 40 nm; 5 nm to 20 nm; 10 nm to 30 nm; 20 nm to 45 nm; 10 nm to 20 nm; 5 nm to 10 nm; 1 nm to 10 nm; or 3 nm to 9 nm.

Meanwhile, the positive electrode active layer may have a two-layer structure in which a first positive electrode active layer and a second positive electrode active layer are sequentially stacked on the positive electrode current collector. The two-layer structure of the positive electrode active layer allows for easy control of the composition of each layer, so that the performance of the positive electrode can be improved by varying the types or contents of components contained in each layer or by controlling the physical properties differently according to specific purposes such as increasing the energy efficiency of the battery or improving the adhesion between the active layer and the current collector.

One or more of the first positive electrode active layer or the second positive electrode active layer may include the first positive electrode active material. For example, the positive electrode active layer according to the present disclosure may have the following structure:

(1) A structure in which the first positive electrode active layer, which is the lower layer, includes the first positive electrode active material, and the second positive electrode active layer, which is the upper layer, includes the second positive electrode active material,

(2) A structure in which the first positive electrode active layer, which is the lower layer, includes the second positive electrode active material, and the second positive electrode active layer, which is the upper layer, includes the first positive electrode active material,

(3) A structure in which the first positive electrode active layer, which is the lower layer, includes the first positive electrode active material, and the second positive electrode active layer, which is the upper layer, includes the first positive electrode active material and the second positive electrode active material,

(4) A structure in which the first positive electrode active layer, which is the lower layer, includes the first positive electrode active material and the second positive electrode active material, and the second positive electrode active layer, which is the upper layer, includes the first positive electrode active material,

(5) A structure in which the first positive electrode active layer and the second positive electrode active layer each include the first positive electrode active material and the second positive electrode active material together, but the first positive electrode active layer has a higher weight ratio of the first positive electrode active material than the second positive electrode active layer, and

(6) A structure in which the first positive electrode active layer and the second positive electrode active layer each include the first positive electrode active material and the second positive electrode active material together, but the second positive electrode active layer has a higher weight ratio of the first positive electrode active material than the first positive electrode active layer.

The first positive electrode active material according to the present disclosure has an olivine crystal structure as explained earlier, providing high structural stability and excellent high-temperature safety, and contains three or more metals in addition to lithium, offering excellent energy density and lifespan characteristics, thus it can be included in at least one layer of the two-layer structure of the positive electrode active layer.

In addition, the content/weight ratio of the first positive electrode active material and the second positive electrode active material can be adjusted according to their location. Specifically, the first positive electrode active material can be included in a high content/weight ratio in the first positive electrode active layer adjacent to the positive electrode current collector, and the second positive electrode active material can be included in a high content/weight ratio in the second positive electrode active layer adjacent to the negative electrode.

As one example, the positive electrode according to the present disclosure may have the structure of (1) in which a first positive electrode active layer including the first positive electrode active material and a second positive electrode active layer including the second positive electrode active material are sequentially arranged on the positive electrode current collector.

As another example, the positive electrode according to the present disclosure may have the structure of (3) in which a first positive electrode active layer including the first positive electrode active material and a second positive electrode active layer including the first positive electrode active material and the second positive electrode active material are sequentially arranged on the positive electrode current collector. In this case, the content/weight ratio of the first positive electrode active material included in the first positive electrode active layer may be 100 wt.% based on the total weight of the positive electrode active material included in the corresponding layer, but the content/weight ratio of the first positive electrode active material included in the second positive electrode active layer may be less than 100 wt.%.

As yet another example, the positive electrode according to the present disclosure may have the structure of (5) in which the first positive electrode active layer and the second positive electrode active layer each include the first positive electrode active material and the second positive electrode active material. In this case, the content/weight ratio of the first positive electrode active material included in the first positive electrode active layer may exceed 50 wt.% based on the total weight of the positive electrode active material included in the corresponding layer, and the content/weight ratio of the first positive electrode active material included in the second positive electrode active layer may be less than 50 wt.%.

The first positive electrode active material includes lithium manganese iron phosphate represented by Chemical Formula 1 having an olivine structure, which may have low lithium mobility and high electrical resistance. Therefore, the positive electrode according to the present disclosure can easily release heat generated due to high resistance during charging and discharging of the secondary battery through the positive electrode current collector by controlling the content/weight ratio of the first positive electrode active material included in the first positive electrode active layer to be higher than that in the second positive electrode active layer as described above. Accordingly, the positive electrode can improve deterioration due to heat generation of the positive electrode active material, thereby improving lifespan characteristics. In addition, the concentration of the second positive electrode active material included in the second positive electrode active layer can be higher than that in the first positive electrode active layer. This has a form in which the second positive electrode active material with high energy density and capacity is placed adjacent to the negative electrode, thereby enhancing the electrochemical reaction efficiency with the negative electrode during charging and discharging of the secondary battery and improving the electrical properties of the secondary battery.

Meanwhile, the positive electrode active layer may selectively further include a conductive material, a binder, other additives, etc., along with the positive electrode active material as the main component.

In this case, the conductive material may include one or more of acetylene black, Super-P, channel black, furnace black, lamp black, thermal black, graphene, carbon nanotubes, or carbon fibers, but is not limited thereto.

The content of the conductive material may be 0.1 to 10 parts by weight with respect to 100 parts by weight of the total electrode active layer, and specifically, it may be 0.1 to 8 parts by weight, 0.1 to 5 parts by weight, 0.1 to 3 parts by weight, 2 to 6 parts by weight, or 0.5 to 2 parts by weight. The present disclosure can prevent a decrease in charging capacity due to an increase in electrode resistance caused by a low content of conductive material by controlling the content of the conductive material to the above range, and can prevent problems such as a decrease in charging capacity due to a decrease in the content of the electrode active material, or a decrease in rapid charging characteristics due to an increase in the loading amount of the electrode active layer, caused by an excessive amount of conductive material.

In addition, the binder, as a component that assists in binding the positive electrode active material and the conductive material, etc., and binding to the current collector, may be appropriately applied within a range that does not deteriorate the electrical properties of the positive electrode, but specifically, it may include one or more of vinylidene fluoride-hexafluoropropylene copolymer (PVDF-co-HFP), polyvinylidene fluoride (PVdF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene-butadiene rubber (SBR), or fluorine rubber.

The content of the binder may be 0.1 to 10 parts by weight with respect to 100 parts by weight of the total positive electrode active layer, and specifically, it may be 0.1 to 8 parts by weight, 0.1 to 5 parts by weight, 0.1 to 3 parts by weight, or 2 to 6 parts by weight. The present disclosure can prevent deterioration of the adhesion of the active layer due to a low content of binder or deterioration of the electrical properties of the positive electrode due to an excessive amount of binder by controlling the content of the binder contained in the positive electrode active layer to the above range.

Furthermore, the average thickness of the positive electrode active layer may be 50 μm to 500 μm. Specifically, the average thickness of the positive electrode active layer may be 100 μm to 400 μm; 200 μm to 350 μm; 50 μm to 180 μm; 80 μm to 150 μm; 100 μm to 250 μm; or 130 μm to 190 μm. The present disclosure can not only implement high adhesion between the positive electrode active layer and the positive electrode current collector but also implement high energy density of the positive electrode by adjusting the average thickness of the positive electrode active layer to the above range.

Moreover, the positive electrode current collector may use one that has high conductivity without causing chemical changes in the battery. For example, stainless steel, aluminum, nickel, titanium, baked carbon, etc. may be used, and in the case of aluminum or stainless steel, those surface-treated with carbon, nickel, titanium, silver, etc. may also be used. In addition, the average thickness of the current collector may be appropriately applied in the range of 3 μm to 500 μm considering the conductivity and total thickness of the manufactured positive electrode.

The positive electrode according to the present disclosure has the advantages of excellent safety and lifespan characteristics by having the structure described above.

**Method for manufacturing positive electrode**

Furthermore, the present disclosure provides a method for manufacturing the positive electrode, comprising:

coating at least one side of a positive electrode current collector with a positive electrode slurry (S1), and
drying the coated positive electrode slurry to form a positive electrode active layer (S2);
wherein the positive electrode slurry includes a first positive electrode active material represented by the following
Chemical Formula 1 and a second positive electrode active material represented by the following Chemical Formula
2:

[Chemical Formula 1]     $Li_{1+a}Mn_{1-b-c}Fe_bM^1_cPO_4$

[Chemical Formula 2]     $Li_pNi_qCo_rMn_tM^2_wO_2$

in the above Chemical Formula 1 and Chemical Formula 2,
$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$,
$M^2$ is one or more of W, Cu, Fe, V, Cr, Ti, Zr, Zn, Al, In, Ta, Y, La, Sr, Ga, Sc, Gd, Sm, Ca, Ce, Nb, Mg, B, or Mo; and
p, q, r, t, and w are $1.0 \leq p \leq 1.30$, $0 < q \leq 0.9$, $0 < r \leq 0.3$, $0 \leq t \leq 0.3$, and $0 \leq w \leq 0.2$, respectively, provided that $q+r+t+w=1$.

The method for manufacturing the positive electrode according to the present disclosure refers to a method for manufacturing the positive electrode described above. The method for manufacturing the positive electrode can produce a positive electrode by coating a positive electrode slurry on a positive electrode current collector (S1), and forming a positive electrode active layer on the positive electrode current collector by drying the coated positive electrode slurry (S2).

Here, the coating of the positive electrode slurry (S1) refers to the process of discharging and coating a positive electrode slurry including a first positive electrode active material represented by Chemical Formula 1 and a second positive electrode active material represented by Chemical Formula 2 onto the surface of a moving positive electrode current collector. This process (S1) can be applied without particular limitation as long as it is a method commonly applied in the art, but preferably, a die coating method can be used. The die coating method can be performed through a slot die equipped with a shim for controlling the discharge conditions of the positive electrode slurry. In this case, the loading amount and coating thickness of the positive electrode slurry coated on the positive electrode current collector can be easily controlled by adjusting the shape, position, etc. of the shim.

Particularly, in the present disclosure, a dual die can be used to sequentially and simultaneously coat the first positive electrode slurry and the second positive electrode slurry on the positive electrode current collector. The dual die has the advantage of significantly increasing process efficiency compared to coating each slurry separately. In this case, the type and/or content ratio of the first positive electrode active material and the second positive electrode active material in the first positive electrode slurry and the second positive electrode slurry introduced into the dual die can be adjusted according to the composition of the first positive electrode active layer and the second positive electrode active layer to be prepared from them.

For example, the first positive electrode active material can be included in a high content/weight ratio in the first positive electrode slurry to be formed into the first positive electrode active layer, and the second positive electrode active material can be included in a high content/weight ratio in the second positive electrode slurry to be formed into the second positive electrode active layer.

Meanwhile, the positive electrode slurry is intended to form the positive electrode active layer of the positive electrode. Therefore, the positive electrode slurry primarily contains the first positive electrode active material and the second positive electrode active material as main components, and may further include conductive material, binder, etc., as needed. Since the composition of the first positive electrode active material, the second positive electrode active material, conductive material, binder, etc. included in the positive electrode slurry is the same as that of the positive electrode active layer of the lithium secondary battery positive electrode described above, a detailed explanation is omitted.

However, the first positive electrode active material may be manufactured through a specific process. Specifically, the first positive electrode active material can be manufactured by calcining a mixture of the lithium manganese iron phosphate represented by the following Chemical Formula 7 and metal precursor compounds at a temperature of 500°C or higher, more specifically at 500°C to 1,000°C; 500°C to 900°C; 500°C to 800°C; or 500°C to 750°C:

[Chemical Formula 7]     $Li_{1+m}Mn_{1-n}Fe_nPO_4$

in the above Chemical Formula 7,
m and n are $-0.5 \leq m \leq 0.5$, $0.1 \leq n \leq 0.8$.

Generally, conventional olivine-structured positive electrode active materials are prepared by mixing precursor compounds containing each transition metal with lithium phosphate, which is a lithium source material, and calcining this mixture at high temperature. However, the positive electrode active material of the present disclosure may be prepared by first forming a lithium manganese iron phosphate represented by Chemical Formula 7 through calcination of a mixture of a manganese precursor compound, an iron precursor compound, and a lithium phosphate compound, and subsequently mixing and calcining precursor compounds of metals to be doped and/or substituted.

In this case, the compound represented by Chemical Formula 7 can be preliminarily heat-treated at 500°C to 900°C for 0.1 hours to 20 hours before being mixed with the metal precursor compound. Specifically, the compound represented by Chemical Formula 7 can undergo a pre-calcination process for 1 hour to 6 hours; or 1 hour to 3 hours before being mixed with the metal precursor compound. At this time, the pre-calcination process temperature may be 500°C to 800°C; or 550°C to 750°C. The present disclosure can significantly reduce the moisture content in the lithium manganese iron phosphate by performing heat treatment of the lithium manganese iron phosphate represented by Chemical Formula 7 under the described conditions before mixing with the metal precursor compound. Through this, metals contained in the metal precursor compound can be easily doped into the lithium manganese iron phosphate or substituted at the iron atom position. However, at temperatures lower than the described temperature range, there is a limitation that moisture in the lithium manganese iron phosphate is not sufficiently removed, and at temperatures higher than the described temperature range, the crystallinity of the lithium manganese iron phosphate may increase further, making it rather difficult to dope and/or substitute metals.

The compound of Chemical Formula 7 that has been heat-treated in such method can be mixed with metal precursor compounds and calcined, thereby manufacturing the positive electrode active material of the present disclosure. Here, the metal precursor compounds refer to raw materials that supply titanium (Ti), vanadium (V), zirconium (Zr), niobium (Nb), etc. to the lithium manganese iron phosphate represented by Chemical Formula 7. The metal precursor compounds are not particularly limited as long as they can provide titanium (Ti), vanadium (V), zirconium (Zr), and/or niobium (Nb).

Preferably, the titanium (Ti) precursor compound may include one or more of titanium oxide or titanium alkoxide containing titanium (Ti) as a component. For example, the titanium (Ti) precursor compound may include titanium oxides such as TiO, $TiO_2$, or titanium alkoxides such as $Ti[OCH(CH_3)_2]_4$, but is not limited thereto.

Additionally, the vanadium (V) precursor compound may be a vanadium-containing oxide, a vanadium-containing ammonium salt, or a combination thereof. For example, the vanadium (V) precursor compound may include vanadium oxides such as $VO_2$, $V_2O_3$, $V_2O_5$, or ammonium vanadate ($NH_4VO_3$), but is not limited thereto.

The zirconium (Zr) precursor compound may be a zirconium-containing oxide, a zirconium-containing acetate, or a combination thereof. For example, the zirconium (Zr) precursor compound may include zirconium oxides such as $ZrO_2$, or compounds such as $Zr_6O_4(OH)_4(O_2CCH_3)_{12}$, but is not limited thereto.

Moreover, the niobium (Nb) precursor compound may be a niobium-containing acetate, nitrate, sulfate, halide, sulfide, hydroxide, oxide, oxyhydroxide, or a combination thereof. For example, the niobium (Nb) precursor compound may include niobium oxides such as NbO, $NbO_2$, $Nb_2O_5$; niobium salts such as $NbCO_3$, $Nb(NO_3)_2$, $NbSO_4$, niobium acetate, niobium dicarboxylate, niobium citrate, niobium fatty acid salts; niobium oxyhydroxide; niobium chloride; or combinations thereof, but is not limited thereto.

Furthermore, the first positive electrode active material may have the surface coated with a carbon layer, and the carbon layer may be chemical vapor deposited (CVD) under inactive gas conditions to form a uniform layer.

Chemical Vapor Deposition (CVD) refers to a method of depositing vaporized source materials as a thin film on a substrate introduced into a reactor under vacuum or inactive gas conditions. The present disclosure has the advantage of being able to form a thin carbon layer more uniformly on the surface of the first positive electrode active material represented by Chemical Formula 1 by using such chemical vapor deposition (CVD).

In this case, the chemical vapor deposition (CVD) may be performed under conditions where the inside of the reactor is substituted with inactive gases such as nitrogen gas, argon gas, helium gas, etc., in order to prevent impurities from entering the carbon layer during carbon layer deposition and to prevent side reactions from occurring on the carbon layer surface.

In addition, the chemical vapor deposition (CVD) may be performed with some hydrogen gas mixed in the reactor filled with inactive gas during deposition. For example, the chemical vapor deposition (CVD) may perform primary deposition while supplying argon gas at a flow rate of 150 sccm to 250 sccm into the reactor interior substituted with argon gas, and subsequently perform secondary deposition by continuously supplying hydrogen gas at a flow rate of 10 sccm to 20 sccm together with argon gas at a flow rate of 250 sccm to 350 sccm to the reactor. In this case, carbon seeds for carbon layer deposition are generated on the core surface during primary deposition, and the growth of the generated carbon seeds can be promoted during secondary deposition.

The chemical vapor deposition (CVD) may be performed within 100 minutes, and specifically for 1 minute to 100 minutes; 1 minute to 75 minutes; 1 minute to 50 minutes; 1 minute to 30 minutes; 1 minute to 20 minutes; 1 minute to 10 minutes; or 10 minutes to 70 minutes.

In addition, as explained above, when hydrogen gas is mixed during deposition, primary deposition may be performed within 30 minutes, followed by secondary deposition for 30 minutes to 70 minutes.

As one example, the chemical vapor deposition (CVD) may involve primary deposition performed under inactive gas conditions for 10 minutes, followed by secondary deposition performed under conditions where hydrogen gas is partially mixed with inactive gas for 30 sccm to 40 sccm.

The present disclosure can effectively control the thickness of the carbon layer on the core surface by adjusting the chemical vapor deposition (CVD) performance time to the range described above.

Furthermore, the chemical vapor deposition (CVD) may be performed at high temperature conditions for vaporization of the carbon source to form the carbon layer. Specifically, the chemical vapor deposition (CVD) performance temperature may be 500°C to 1,500°C, and more specifically 500°C to 1,300°C; 500°C to 1,100°C; 500°C to 1,000°C; 500°C to 900°C; 600°C to 1,300°C; 800°C to 1,100°C; 1,000°C to 1,500°C; 750°C to 990°C; or 600°C to 900°C.

The present disclosure can not only uniformly form a carbon layer on the first positive electrode active material by controlling the chemical vapor deposition (CVD) temperature to the range described above, but can also convert the carbon deposited on the surface of the first positive electrode active material into a carbon layer with high crystallinity. A carbon layer with high crystallinity can significantly improve the electrical properties such as electrical conductivity of the first positive electrode active material, providing the advantage of enhancing the output performance of the positive electrode during charging and discharging of the secondary battery.

As an example, the first positive electrode active material according to the present disclosure includes a carbon layer deposited by chemical vapor deposition (CVD) in the temperature range described above, such that in Raman spectroscopy analysis, the area of the peak appearing at $1580\pm50$ $cm^{-1}$ may be larger than the area of the peak appearing at $1360\pm50$ $cm^{-1}$.

In Raman spectroscopy analysis, the peaks appearing at $1360\pm50$ $cm^{-1}$ and $1580\pm50$ $cm^{-1}$ respectively are peaks observed in carbon compounds such as graphite, carbon black, graphene, and carbon nanotubes (CNT). Among these, the peak appearing at $1360\pm50$ $cm^{-1}$ is a peak that appears when inelastic scattering by phonons during Raman spectroscopy analysis and elastic scattering occur around defect/substitution points of the carbon compound, indicating that the higher the intensity and/or area ratio of the peak, the more defects or substitutions the compound has in its structure, and the lower the crystallinity. In contrast, the peak appearing at $1580\pm50$ $cm^{-1}$ is a peak due to first-order Raman scattering, indicating that the higher the intensity and/or area ratio of the peak, the higher the crystallinity. That is, the first positive electrode active material according to the present disclosure has a larger area of the peak indicating the crystallinity of carbon in the carbon layer than the area of the peak indicating the non-crystallinity of the carbon compound in Raman spectroscopy analysis, indicating that the crystallinity of the carbon layer is high.

In this case, the carbon coating layer may have a ratio of 30% to 90% for the area of the peak appearing at $1360\pm50$ $cm^{-1}$ based on the area of the peak appearing at $1580\pm50$ $cm^{-1}$, and more specifically, may have a ratio of 50% to 90%; 60% to 90%; 70% to 90%; 60% to 85%; or 55% to 80%.

Furthermore, the chemical vapor deposition (CVD) may be performed using a carbon source in solid state. Specifically, the chemical vapor deposition (CVD) can use carbon sources such as a dot-shaped carbon compound and a linear carbon compound, a polymer compound, either individually or in combination.

More specifically, the dot-shaped carbon compound may include one or more of acetylene black, channel black, furnace black, lamp black, thermal black, or graphene. Also, the linear carbon compound may include one or more of carbon nanotubes or carbon fibers.

In addition, the polymer compound may include one or more of polyvinylpyrrolidone (PVP), polyacrylonitrile (PAN), polypyrrole (PPy), polyvinyl alcohol (PVA), polyacrylic acid (PAA), polymethylacrylate (PMA), or polymethylmethacrylate (PMMA).

As one example, the carbon source may be a dot-shaped carbon compound, and the dot-shaped carbon compound may include acetylene black.

As another example, the carbon source may include both a dot-shaped carbon compound and a linear carbon compound. In this case, the dot-shaped carbon compound may include acetylene black, and the linear carbon compound may include carbon nanotubes (CNT). Furthermore, in this case, the dot-shaped carbon compound and the linear carbon compound may be included in a weight ratio of 1:10 to 10:1, and specifically in a weight ratio of 1:5 to 5:1, 1:3 to 3:1, 1:2 to 2:1, 1:5 to 1:1.5, 1:1.5 to 1.5, or 1:1.5 to 1.5:1.

As yet another example, the carbon source may include a dot-shaped carbon compound, a linear carbon compound, and a polymer compound. In this case, the dot-shaped carbon compound may include acetylene black, the linear carbon compound may include carbon nanotubes (CNT), and the polymer compound may include polyvinylpyrrolidone (PVP). In this case, the linear carbon compound and polymer compound may each be included at 10 to 90 parts by weight based on 100 parts by weight of the dot-shaped carbon compound, and specifically at 10 to 80 parts by weight; 10 to 70 parts by weight, 10 to 60 parts by weight, 10 to 50 parts by weight, 10 to 40 parts by weight, 30 to 70 parts by weight, 60 to 80 parts by weight, or 20 to 40 parts by weight, based on 100 parts by weight of the dot-shaped carbon compound.

Conventional chemical vapor deposition (CVD) for forming a carbon layer has been performed using hydrocarbon gases such as methane ($CH_4$) gas, ethane ($CH_3CH_3$) gas, propane ($CH_3CH_2CH_3$) gas, ethylene ($CH_2CH_2$) gas, and acetylene (CHCH) gas. In this case, since no process is required to gasify the carbon source, it can be performed at lower temperatures. However, it is not easy to control the carbon source in the gaseous state during deposition, and due to the high reactivity of the carbon source, side reactions are induced on the core surface, resulting in reduced activity of the positive electrode active layer. Also, the formed carbon layer has low crystallinity and forms an amorphous layer, so the specific surface area is not large. However, the present disclosure not only has high workability during deposition by using a carbon source in solid state, but also has excellent electrical properties such as electrical conductivity due to the high crystallinity of the carbon layer. In particular, when using polymer compounds such as polyvinylpyrrolidone (PVP) as a carbon source, a carbon layer with a porous structure can be formed, allowing a carbon layer with a high surface area to be formed on the core surface. In this case, the ion transfer capability of the carbon layer increases, improving the lithium diffusion coefficient, so the manufactured positive electrode active material exhibits excellent output performance.

Meanwhile, the method for manufacturing the positive electrode includes a step (S2) of forming a positive electrode active layer from the coated positive electrode slurry. This step (S2) may refer to the process of drying the positive electrode slurry. At this time, the drying of the positive electrode slurry can be applied without particular limitation as long as it is a method that can be conventionally applied in the art. For example, the drying can dry the positive electrode slurry by applying thermal energy to the positive electrode slurry using a hot air dryer, vacuum oven, etc.

In addition, the manufacturing method according to the present disclosure may further include a process of rolling the positive electrode active layer formed by drying the positive electrode slurry. The rolling refers to a process of increasing the density of the entire positive electrode active layer by applying pressure to the surface of the formed positive electrode active layer using a roll press, etc. For this purpose, the rolling can be performed under certain pressure and speed conditions at a temperature higher than room temperature.

Specifically, the rolling can be performed at a temperature of 50°C to 100°C, more specifically at 60°C to 100°C; 75°C to 100°C; 85°C to 100°C; 50°C to 90°C; 60°C to 80°C; or 65°C to 90°C.

Additionally, the rolling can be performed at a rolling speed of 2m/s to 7m/s, more specifically at 2m/s to 6.5m/s; 2m/s to 6m/s; 2m/s to 5.5m/s; 2m/s to 5m/s; 2m/s to 4.5m/s; 2m/s to 4m/s; 2.5m/s to 4m/s; 2.5m/s to 3.5m/s; 3.5m/s to 5m/s; 5m/s to 7m/s; 5.5m/s to 6.5m/s; or 6m/s to 7m/s.

Moreover, the rolling can be performed under a pressure condition of 50MPa to 200MPa, specifically at 50MPa to 150MPa; 50MPa to 100MPa; 100MPa to 200MPa; 150MPa to 200MPa; or 80MPa to 140MPa.

The present disclosure can maximize the energy density of the positive electrode active layer while minimizing damage to the positive electrode active layer formed by performing rolling under the above temperature, speed, and/or pressure conditions.

## Electrode assembly for lithium secondary battery

Furthermore, the present disclosure provides: an electrode assembly comprising the positive electrode according to the present disclosure, a negative electrode, and a separator provided between the positive electrode and the negative electrode.

The electrode assembly according to the present disclosure may refer to an electrode assembly for a lithium secondary battery. The electrode assembly includes the positive electrode according to the present disclosure as explained above, a negative electrode, and a separator provided between them. More specifically, the electrode assembly has a structure in which multiple positive electrodes and a plurality of negative electrodes are arranged alternately with separators interposed between them. The electrode assembly features high energy density and charge/discharge capacity as well as excellent safety by including the positive electrode of the present disclosure.

Here, since the positive electrode has the same configuration as the positive electrode described above, a detailed explanation of its configuration is omitted.

In addition, as with the positive electrode, the negative electrode includes a negative electrode active layer on at least one side of a negative electrode current collector. The negative electrode active layer is a layer that implements the electrical activity of the negative electrode, and includes as a main component a negative electrode active material that implements an electrochemical oxidation-reduction reaction during charging and discharging of the battery.

The negative electrode active material may include those conventionally applied in the art. For example, the negative electrode active material may include one or more selected from: carbon-based materials such as crystalline artificial graphite, crystalline natural graphite, amorphous hard carbon, low-crystalline soft carbon, acetylene black, graphene, and fibrous carbon; silicon-based materials such as Si, SiO, and $SiO_2$; tin-based materials such as Sn, SnO, and $SnO_2$; metal composite oxides such as $Li_xFe_2O_3(0\leq x\leq1)$, $Li_xWO_2(0\leq x\leq1)$, $Sn_xM^11-xM^2yOz$ (where $M^1$ is Mn, Fe, Pb, or Ge; $M^2$ is Al, B, P, Si, elements from groups 1, 2, 3 of the periodic table, or halogens; $0<x\leq1$; $1\leq y\leq3$; $1\leq z\leq8$); and metal oxides such as PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$.

Moreover, the negative electrode active layer may selectively include binders and other additives along with the negative electrode active material as needed.

The binder is a component that assists in binding between negative electrode active materials and binding the negative electrode active layer to the electrode current collector, and can be appropriately applied within a range that does not deteriorate the electrical properties of the electrode. Specifically, the binder may include one or more selected from vinylidene fluoride-hexafluoropropylene copolymer (PVDF-co-HFP), polyvinylidene fluoride (PVdF), polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene-butadiene rubber (SBR), and fluorine rubber.

The content of the binder may be 0.1 to 10 parts by weight with respect to 100 parts by weight of the entire negative electrode active layer, and specifically, it may be 0.1 to 8 parts by weight, 0.1 to 5 parts by weight, 0.1 to 3 parts by weight, or 2 to 6 parts by weight. The present disclosure can prevent deterioration of the adhesion of the negative electrode active layer due to a low content of binder, or deterioration of the electrical properties of the electrode due to an excessive amount of binder by controlling the content of the binder contained in the electrode active layer to the above range.

Also, the negative electrode current collector is not particularly limited as long as it has high conductivity without causing chemical changes in the battery. For example, copper, aluminum, stainless steel, nickel, titanium, baked carbon, etc. may be used, and in the case of copper or stainless steel, those surface-treated with carbon, nickel, titanium, silver, etc. may also be used. In addition, the average thickness of the electrode current collector may be appropriately applied in the range of 1 μm to 500 μm considering the conductivity and total thickness of the manufactured electrode.

Furthermore, the separator interposed between the positive electrode and negative electrode in each unit cell is an insulating thin film with high ion permeability and mechanical strength, and is not particularly limited as long as it is conventionally used in the art. Specifically, it may use one or more polymers including chemically resistant and hydrophobic polypropylene, polyethylene, and polyethylene-propylene copolymer. The separator may have a porous polymer substrate form such as a sheet or nonwoven fabric including the polymers described above, and in some cases, it may also have the form of a composite separator in which organic or inorganic particles are coated on the porous polymer substrate by an organic binder. Additionally, the separator may have an average diameter of the pores of 0.01 μm to 10 μm, and an average thickness of 5 μm to 300 μm.

Meanwhile, the type of electrode assembly is not particularly limited, but specifically, it may be in the form of a secondary battery including a stack type, zigzag type, or zigzag-stack type electrode assembly. As one example, the lithium secondary battery according to the present disclosure may be a pouch-type secondary battery or a prismatic secondary battery.

Pouch-type secondary batteries and/or prismatic secondary batteries have the advantage of high utility in terms of energy density as they can pack unit cells of secondary batteries at high density within a limited space.

The lithium secondary battery according to the present disclosure has the advantages of large charge-discharge capacity and excellent lifespan characteristics by having the above-described configuration.

Hereinafter, the present disclosure will be described in more detail through examples and comparative examples.

However, the following examples and comparative examples are merely illustrating the present disclosure, and the content of the present disclosure is not limited to the following examples and comparative examples.

**Preparation Examples 1 to 5. Manufacturing of first positive electrode active material**

First, the compound represented by Chemical Formula 1 was prepared for use as the first positive electrode active material. For this, lithium manganese iron phosphate ($LiMn_{0.7}Fe_{0.3}PO_4$) was purchased commercially. The purchased lithium manganese iron phosphate ($LiMn_{0.7}Fe_{0.3}PO_4$) was heat-treated at 700°C for 1 hour, then mixed with titanium dioxide ($TiO_2$), ammonium vanadate ($NH_4VO_3$), and niobium oxide ($Nb_2O_5$), and calcined at $700\pm20$°C under a nitrogen atmosphere to manufacture the compound powder represented by Chemical Formula 1. At this time, the mixing amounts of titanium dioxide ($TiO_2$), ammonium vanadate ($NH_4VO_3$), and niobium oxide ($Nb_2O_5$) were adjusted so that the mole fraction of metals contained in the metal precursor compounds, based on a mole fraction of 1 for all metals excluding lithium in the manufactured compound, satisfied Table 1.

X-ray diffraction (XRD) was performed on the manufactured compound powder to measure ① lattice constants a, b, and c, and ② X-axis size representing grain size. Specifically, X-ray diffraction spectroscopy analysis was performed using the Rietveld refinement method, considering the metals doped and/or substituted in the lithium manganese iron phosphate ($LiMn_{0.7}Fe_{0.3}PO_4$). At this time, the X-ray diffraction analysis was conducted using a Bruker D8 Endeavor (Cu-Kα, λ=1.54Å) equipped with a LynxEye XE-T position sensitive detector or a LynxEye position sensitive detector, with the sample placed in the groove of a general powder holder. Afterwards, the sample surface was leveled using a slide glass, and the sample height was filled to match the edge of the holder, then measured under the conditions of FDS 0.5°, 2θ=15°~90° region, step size=0.02°, total scan time=approximately 20 minutes. For crystal grain size analysis, instrumental broadening was considered using the Fundamental Parameter Approach (FPA) built into the Bruker TOPAS program, and all peaks in the measurement range were used during fitting. The peak shape used was FP (first principle) with Lorentzian contribution among the peak shapes available in TOPAS, and strain was not considered at this time. The measured lattice constant c and the crystal grain size (i.e., X-axis size) are shown in Table 1, and the correlation between lattice constant c and lattice constants a and b is shown in Figure 1. Referring to Figure 1, the lattice constant c shows a linear relationship when plotted against lattice constants a and b, and it was confirmed that as the concentration of lithium (Li) in the structure increases, it tends toward the lower right. Additionally, as the number of types of metals doped and/or substituted in the positive electrode active material increases, a linear relationship appears, confirming that it follows Vegard's law.

In addition, particle diameter distribution analysis (PSD, particle size distribution) was performed on each of the manufactured cores to measure $D_{50}$. Specifically, the particle size distribution analysis (PSD) was performed by the laser diffraction method. The particle size distribution analysis (PSD) device used was a Mastersizer 3000 from Malvern, and the laser refractive index was adjusted to 2.0 to 2.2. After dispersing less than 1g of each positive electrode active material in deionized water (DI water) using an ultrasonic irradiator installed inside the device, the particle size distribution was calculated by measuring the difference in diffraction patterns according to particle size when the dispersed particles pass through the laser beam. At this time, $D_{50}$ can be measured by calculating the particle diameter at the point where 50% of the cumulative area distribution according to particle diameter in the measuring device is reached, and the measured and calculated results are shown in Table 1 below.

[Table 1]

| | | Preparation Example 1 | Preparation Example 2 | Preparation Example 3 | Preparation Example 4 | Preparation Example 5 |
|---|---|---|---|---|---|---|
| Metal precursor compound | $TiO_2$ | - | 0.06 | 0.03 | 0.02 | 0.02 |
| | $NH_4VO_3$ | - | - | 0.03 | 0.02 | 0.02 |
| | $Nb_2O_5$ | - | - | - | 0.02 | 0.02 |
| Whether heat-treatment is performed before mixing with metal precursor compound (700°C for 1 hour) | | X | X | X | X | O |
| XRD | Lattice constant c | 4.69162 Å | 4.69184 Å | 4.69202 Å | 4.69209 Å | 4.69214 Å |
| | X-axis size | 120nm | 100nm | 96nm | 91nm | 88nm |
| Average particle diameter ($D_{50}$) | | 1.40$\mu$m | 1.20$\mu$m | 1.03$\mu$m | 0.90$\mu$m | 0.81$\mu$m |

**Preparation Example 6. Manufacturing of first positive electrode active material**

The compound prepared in Preparation Example 5 was inserted into a chemical vapor deposition reactor, and the inside of the reactor was substituted with argon gas. Then, the inside of the reactor was heated to 800°C at a heating rate of 50°C/min, and chemical vapor deposition was performed for 15 minutes to 20 minutes while supplying argon gas at 180 sccm to 220 sccm. Then, chemical vapor deposition was additionally performed for 25 minutes to 35 minutes while continuously supplying hydrogen gas and argon gas at 10 sccm to 20 sccm and 280 sccm to 320 sccm, respectively, to prepare a first positive electrode active material with a carbon layer formed on the surface.

The carbon source used for chemical vapor deposition consisted of dot-shaped carbon compounds, linear carbon compounds, and polymer compounds, using a mixture of 50 wt.% acetylene black, 35 wt.% carbon nanotubes (CNT), and 15 wt.% polyvinylpyrrolidone (PVP) particles. The carbon source was used to be 4 wt.% to 6 wt.% of the total weight of the positive electrode active material.

Particle size distribution (PSD) analysis was performed on the manufactured first positive electrode active material. The $D_{50}$ of the first positive electrode active material was confirmed to be approximately 0.7 $\mu$m to 1.6 $\mu$m. Furthermore, transmission electron microscopy (TEM) analysis was performed on the manufactured positive electrode active materials to measure the average thickness of the carbon layer provided on the core surface. The results confirmed that the average thickness of the carbon layer formed on the core surface was approximately 5 nm to 10 nm.

**Preparation Example 7. Manufacturing** of first **positive electrode active material**

The positive electrode active material was prepared by performing the same method as Preparation Example 6, except for calcination at 800±50°C for 5 minutes.

Particle size distribution (PSD) analysis was performed on the manufactured first positive electrode active material. The $D_{50}$ of the first positive electrode active material was confirmed to be approximately 1.4 $\mu$m to 1.9 $\mu$m.

Furthermore, transmission electron microscopy (TEM) analysis was performed on the manufactured positive electrode active materials to measure the average thickness of the carbon layer provided on the core surface. The results confirmed that the average thickness of the carbon layer formed on the core surface was approximately 11 nm to 15 nm.

**Examples 1 to 12 and Comparative Examples 1 to 3. Manufacturing of lithium secondary battery**

N-methylpyrrolidone solvent was injected into a homo mixer, and 96 parts by weight of prepared positive electrode active material; 1.5 parts by weight of carbon black as a conductive material; and 2.5 parts by weight of polyvinylidene fluoride (PVdF) as a binder were added respectively.

At this time, the positive electrode active material used the first positive electrode active material (hereinafter, 'LMFM$^1$P') prepared in Preparation Examples 1 to 7 as the first positive electrode active material and $LiNi_{0.6}Co_{0.1}Mn_{0.3}O_2$ (hereinafter, 'NCM', average particle size: approximately 3 $\mu$m to 5 $\mu$m) as the second positive electrode active material in the weight ratio shown in Table 2 based on the total weight of the positive electrode slurry. Then, each slurry was mixed at 3,000 rpm for 60 minutes to prepare the first positive electrode slurry and the second positive electrode slurry with 50% solid content.

An aluminum foil (average thickness: 12 $\mu$m) was prepared as a positive electrode current collector, and a dual die was used to simultaneously cast the prepared first positive electrode slurry and second positive electrode slurry at the same thickness on one side of the prepared aluminum foil. The aluminum foil with the first positive electrode slurry and second positive electrode slurry cast on it was dried in a vacuum oven at 130°C and then rolled to manufacture a positive electrode. The total thickness of the rolled positive electrode active layer was 150 $\mu$m.

[Table 2]

| | First positive electrode slurry | | | Second positive electrode slurry | | |
|---|---|---|---|---|---|---|
| | LMFM$^1$P Type | Content [wt.%] | | LMFM$^1$P Type | Content [wt.%] | |
| | | LMFM$^1$P | NCM | | LMFM$^1$P | NCM |
| Comparative Example 1 | - | 0 | 100 | - | 0 | 100 |
| Comparative Example 2 | Preparation Example 5 | 100 | 0 | Preparation Example 5 | 100 | 0 |
| Comparative Example 3 | Preparation Example 1 | 70 | 30 | Preparation Example 1 | 70 | 30 |
| Example 1 | Preparation Example 5 | 50 | 50 | Preparation Example 5 | 50 | 50 |
| Example 2 | Preparation Example 5 | 100 | 0 | - | 0 | 100 |
| Example 3 | - | 0 | 100 | Preparation Example 5 | 100 | 0 |
| Example 4 | Preparation Example 5 | 100 | 0 | Preparation Example 5 | 50 | 50 |
| Example 5 | Preparation Example 5 | 50 | 50 | Preparation Example 5 | 100 | 0 |
| Example 6 | Preparation Example 5 | 30 | 70 | Preparation Example 5 | 70 | 30 |
| Example 7 | Preparation Example 5 | 70 | 30 | Preparation Example 5 | 30 | 70 |
| Example 8 | Preparation Example 2 | 70 | 30 | Preparation Example 2 | 30 | 70 |
| Example 9 | Preparation Example 3 | 70 | 30 | Preparation Example 3 | 30 | 70 |
| Example 10 | Preparation Example 4 | 70 | 30 | Preparation Example 4 | 30 | 70 |

(continued)

| | First positive electrode slurry | | | Second positive electrode slurry | | |
|---|---|---|---|---|---|---|
| | LMFM$^1$P Type | Content [wt.%] | | LMFM$^1$P Type | Content [wt.%] | |
| | | LMFM$^1$P | NCM | | LMFM$^1$P | NCM |
| Example 11 | Preparation Example 6 | 70 | 30 | Preparation Example 6 | 30 | 70 |
| Example 12 | Preparation Example 7 | 70 | 30 | Preparation Example 7 | 30 | 70 |

**Experimental Example.**

To evaluate the performance of the positive electrode according to the present disclosure, first, a lithium metal disc was prepared as a negative electrode. The prepared negative electrode and the positive electrodes prepared in Examples 1 to 12 and Comparative Examples 1 to 3 were placed opposite to each other, and a separator composed of 18 $\mu$m polypropylene was interposed between them to manufacture an electrode assembly. Each manufactured electrode assembly was inserted into a battery case, the electrolyte composition was injected into the battery case, and then the case was sealed to manufacture a half-cell. At this time, as the electrolyte composition, a solution in which lithium hexafluorophosphate (LiPF$_6$, 1.0M) was mixed with a mixture of ethylene carbonate (EC): ethyl methyl carbonate (EMC) = 1:1 (volume ratio) was used.

The following experiments were performed on each of the manufactured half-cells.

1. Output characteristics of lithium secondary battery

Each half-cell was subjected to constant current/constant voltage charging (CC/CV charge) at a temperature of 25°C, followed by constant current discharge (CC discharge) to measure the initial discharge capacity. At this time, the constant current/constant voltage charging was performed with a constant current at a rate of 0.1C until the voltage reached 4.2V, and then performed in a constant voltage mode maintaining 4.2V with a cut-off at a current rate of 0.1 C. Also, the constant current discharge was performed at a rate of 1.0C until reaching 1.5V.

Then, each half-cell was fully charged at 25°C with a charging current rate of 1.0C to a charge cut-off voltage of 4.2V to 4.25V, and the high-rate discharge capacity was measured while discharging in the range of 1.0C to 5.0C rate. The high-rate discharge characteristics of each lithium secondary battery were evaluated by calculating the relative discharge capacity ratio based on the initial discharge capacity for each discharge rate from the measured discharge capacity. The measured results are shown in Table 3.

2. High-temperature lifespan characteristics

The discharge capacity retention rate of each half-cell was measured under high-temperature conditions. Specifically, at 45°C, charging with a constant current of 1C until the voltage reached 4.25V, and discharging with a constant current of 1C until the voltage reached 2.5V were set as 1 cycle, and then 300 cycles of charge and discharge were performed on each half-cell.

At this time, the charge capacity of the 1st cycle and the charge capacity of the 300th cycle were measured during the charge and discharge of each half-cell. The high-temperature cycle life of each half-cell was evaluated by calculating the charge capacity retention rate of the 300th cycle based on the charge capacity of the 1st cycle. The results are shown in Table 3 below.

[Table 3]

| Unit: % | Initial discharge capacity by discharge rate Relative discharge capacity ratio | | | | 300th cycle capacity retention rate [%] |
|---|---|---|---|---|---|
| | 1C | 2C | 3C | 5C | |
| Comparative Example 1 | 97.9 | 92.7 | 87.8 | 85.2 | 63.7 |
| Comparative Example 2 | 93.4 | 85.6 | 82.5 | 72.3 | 89.1 |
| Comparative Example 3 | 94.2 | 83.5 | 81.8 | 77.5 | 78.6 |
| Example 1 | 96.5 | 89.4 | 83.1 | 78.5 | 81.4 |

(continued)

| Unit: % | Initial discharge capacity by discharge rate Relative discharge capacity ratio | | | | 300th cycle capacity retention rate [%] |
|---|---|---|---|---|---|
| | 1C | 2C | 3C | 5C | |
| Example 2 | 95.2 | 88.1 | 84.3 | 79.2 | 82.8 |
| Example 3 | 96.7 | 90.8 | 84.1 | 79.8 | 80.5 |
| Example 4 | 95.8 | 89.7 | 84.9 | 80.1 | 85.3 |
| Example 5 | 94.7 | 88.7 | 83.3 | 79.0 | 83.4 |
| Example 6 | 93.9 | 88.2 | 82.7 | 78.7 | 83.0 |
| Example 7 | 97.2 | 90.1 | 86.2 | 81.5 | 86.8 |
| Example 8 | 94.6 | 84.3 | 82.5 | 78.1 | 80.2 |
| Example 9 | 95.5 | 88.4 | 84.5 | 78.6 | 83.6 |
| Example 10 | 96.9 | 89.5 | 85.7 | 79.2 | 84.1 |
| Example 11 | 97.3 | 91.0 | 87.2 | 82.5 | 86.7 |
| Example 12 | 95.6 | 87.2 | 82.3 | 77.8 | 79.3 |

As shown in Table 3 above, the positive electrode according to the present disclosure has excellent output performance and excellent high-temperature lifespan characteristics.

Specifically, the half-cells of the examples including both the first positive electrode active material represented by Chemical Formula 1 and the second positive electrode active material represented by Chemical Formula 2 showed high discharge capacity ratios of about 78.0% or more even under high-rate conditions of 5C or higher, and the capacity retention rate was confirmed to be about 79% or more even after 300 cycles of charge and discharge were performed under high-temperature conditions.

From these results, it can be seen that the positive electrode according to the present disclosure has excellent output performance during charge and discharge and excellent lifespan characteristics.

While the present disclosure has been described with reference to exemplary aspects thereof, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

## Claims

1. A positive electrode, comprising:

a positive electrode current collector; and
a positive electrode active layer provided on at least one side of the positive electrode current collector,
wherein the positive electrode active layer contains a first positive electrode active material represented by the Chemical Formula 1 and a second positive electrode active material represented by the Chemical Formula 2:

[Chemical Formula 1]     $Li_{1+a}Mn_{1-b-c}Fe_bM^1_cPO_4$

[Chemical Formula 2]     $Li_pNi_qCo_rMn_tM^2_wO_2$

wherein Chemical Formula 1 and Chemical Formula 2,
$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$,
$M^2$ is one or more of W, Cu, Fe, V, Cr, Ti, Zr, Zn, Al, In, Ta, Y, La, Sr, Ga, Sc, Gd, Sm, Ca, Ce, Nb, Mg, B, or Mo, and
p, q, r, t, and w are $1.0 \leq p \leq 1.30$, $0 < q \leq 0.9$, $0 < r \leq 0.3$, $0 \leq t \leq 0.3$, and $0 \leq w \leq 0.2$, respectively, provided that q+r+t+w=1.

2. The positive electrode of claim 1, wherein the first positive electrode active material represented by Chemical Formula 1 comprises one or more of the compounds represented by one of Chemical Formula 3, Chemical Formula 4, Chemical Formula 5, or Chemical Formula 6:

[Chemical Formula 3]      $Li_{1+a}Mn_{1-b-x}Fe_bTi_xPO_4$

[Chemical Formula 4]      $Li_{1+a}Mn_{1-b-x-y}Fe_bTi_xV_yPO_4$

[Chemical Formula 5]      $Li_{1+a}Mn_{1-b-x-y-z}Fe_bTi_xV_yNb_zPO_4$

[Chemical Formula 6]      $Li_{1+a}Mn_{1-b-x-y-z}Fe_bTi_xZr_yNb_zPO_4$

wherein Chemical Formula 3 to Chemical Formula 6,
a, b, x, y, and z are $-0.5 \leq a \leq 0.5$, $0.1 \leq b \leq 0.8$, $0 < x \leq 0.2$, $0 < y \leq 0.1$, $0 < z \leq 0.1$, provided that $0.001 \leq x+y \leq 0.2$ or $0.001 \leq x+y+z \leq 0.2$.

3. The positive electrode of claim 1, wherein the first positive electrode active material has a lattice constant c ranging from 4.69165 Å to 4.80 Å when analyzed by X-ray diffraction, the first positive electrode active material satisfying Equation 1:

$$[Equation\ 1]$$

$$y = -px + q$$

in the above equation 1,

y represents the lattice constant c,
x represents $\sqrt{a^2 + b^2}$ , wherein the a and b are lattice constants a and b, respectively,
p and q are $-0.08 \leq p \leq -0.07$ and $5 \leq q \leq 6$, respectively.

4. The positive electrode of claim 1, wherein the first positive electrode active material has an average particle diameter ($D_{50}$) ranging from 0.5 $\mu$m to 10 $\mu$m.

5. The positive electrode of claim 1, wherein the first positive electrode active material has a structure with a carbon layer coated on a surface thereof.

6. The positive electrode of claim 1, wherein an average thickness of the carbon layer is 50 nm or less.

7. The positive electrode of claim 1, wherein the positive electrode active layer comprises:

a first positive electrode active layer in contact with the positive electrode current collector; and
a second positive electrode active layer provided on the first positive electrode active layer.

8. The positive electrode of claim 7, wherein the first positive electrode active material is included in any one or more of the first positive electrode active layer or the second positive electrode active layer.

9. The positive electrode of claim 8, wherein when the first positive electrode active material is included in the first positive electrode active layer and the second positive electrode active layer, an amount of the first positive electrode active material included in the first positive electrode active layer is greater than an amount of the first positive electrode active material included in the second positive electrode active layer.

10. A method for manufacturing a positive electrode, comprising:

coating at least one side of a positive electrode current collector with a positive electrode slurry; and
drying the coated positive electrode slurry to form a positive electrode active layer;
wherein the positive electrode slurry comprises a first positive electrode active material represented by Chemical Formula 1 and a second positive electrode active material represented by Chemical Formula 2:

[Chemical Formula 1]  $Li_{1+a}Mn_{1-b-c}Fe_bM^1_cPO_4$

[Chemical Formula 2]  $Li_pNi_qCo_rMn_tM^2_wO_2$

wherein Chemical Formula 1 and Chemical Formula 2,
$M^1$ is one or more of Ti, V, Zr, Sr, Sb, B, or Nb,
a, b, and c are $-0.5 \leq a \leq 0.5$, $0.1 \leq b \leq 0.8$, $0.001 \leq c \leq 0.2$,
$M^2$ is one or more of W, Cu, Fe, V, Cr, Ti, Zr, Zn, Al, In, Ta, Y, La, Sr, Ga, Sc, Gd, Sm, Ca, Ce, Nb, Mg, B, and Mo; and
p, q, r, t, and w are $1.0 \leq p \leq 1.30$, $0 < q \leq 0.9$, $0 < r \leq 0.3$, $0 \leq t \leq 0.3$, and $0 \leq w \leq 0.2$, respectively, provided that $q+r+t+w=1$.

11. The method for manufacturing the positive electrode of claim 10, wherein the first positive electrode active material is prepared by a step of calcining a mixture of lithium manganese iron phosphate represented by Chemical Formula 7 and a metal precursor compound at a temperature of 500°C or higher:

[Chemical Formula 7]  $Li_{1+m}Mn_{1-n}Fe_nPO_4$

in Chemical Formula 7,
m and n are $-0.5 \leq m \leq 0.5$, $0.1 \leq n \leq 0.8$.

12. The method for manufacturing the positive electrode of claim 11, wherein the lithium manganese iron phosphate represented by the above chemical formula 7 is heat-treated at a temperature ranging from 500°C to 900°C before being mixed with the metal precursor compound.

13. The method for manufacturing the positive electrode of claim 11, wherein the first positive electrode active material has a structure in which a carbon layer is coated on a surface thereof, and
wherein the carbon layer is formed by chemical vapor deposition (CVD) under inactive gas conditions.

14. The method for manufacturing the positive electrode of claim 13, wherein the chemical vapor deposition (CVD) uses a carbon source of one or more of a carbon structure comprising a dot-shaped carbon compound, a carbon structure comprising a linear carbon compound, or one or more polymer compounds.

15. An electrode assembly comprising the positive electrode according to claim 1, a negative electrode, and a separator provided between the positive electrode and the negative electrode.

【FIG. 1】

## INTERNATIONAL SEARCH REPORT

| International application No. |
| --- |
| **PCT/KR2025/000435** |

| A. | CLASSIFICATION OF SUBJECT MATTER |
| --- | --- |

**H01M 4/136**(2010.01)i; **H01M 4/131**(2010.01)i; **H01M 4/36**(2006.01)i; **H01M 4/58**(2010.01)i; **H01M 4/525**(2010.01)i; **H01M 4/505**(2010.01)i; **H01M 4/1397**(2010.01)i; **H01M 4/1391**(2010.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 4/136(2010.01); C01B 25/45(2006.01); H01M 4/36(2006.01); H01M 4/505(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 조립체(electrode assembly), 양극(cathode), 올리빈 결정구조(olivine crystal structure), 층상 결정 구조(layered crystal structure), LFP계 화합물(LFP-based compound), NCM계 화합물(NCM-based compound)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-143505 A (TAIHEIYO CEMENT CORP.) 03 October 2022 (2022-10-03) See claims 1, 2, 4 and 6; and paragraphs [0014], [0019], [0052], [0056], [0067], [0068] and [0077]. | 1-6,10,11,13-15 |
| Y | | 7-9,12 |
| Y | KR 10-2023-0162454 A (LG ENERGY SOLUTION, LTD.) 28 November 2023 (2023-11-28) See claims 1-4. | 7-9 |
| Y | KR 10-2023-0081051 A (COSMO AM&T CO., LTD.) 07 June 2023 (2023-06-07) See claims 14 and 16. | 12 |
| A | KR 10-2019-0012839 A (LG CHEM, LTD.) 11 February 2019 (2019-02-11) See abstract; and claims 1-9. | 1-15 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 April 2025** | **11 April 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2025/000435**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0076147 A (TORAY INDUSTRIES, INC.) 23 June 2021 (2021-06-23)<br>See abstract; and claims 1-6. | 1-15 |

Form PCT/ISA/210 (second sheet) (July 2022)

EP 4 769 536 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| JP | 2022-143505 | A | 03 October 2022 | None | | | |
| KR | 10-2023-0162454 | A | 28 November 2023 | None | | | |
| KR | 10-2023-0081051 | A | 07 June 2023 | KR | 10-2024-0152808 | A | 22 October 2024 |
| | | | | KR | 10-2024-0152809 | A | 22 October 2024 |
| | | | | KR | 10-2024-0153299 | A | 22 October 2024 |
| | | | | KR | 10-2734161 | B1 | 25 November 2024 |
| KR | 10-2019-0012839 | A | 11 February 2019 | CN | 110073525 | A | 30 July 2019 |
| | | | | CN | 110073525 | B | 08 March 2022 |
| | | | | EP | 3534437 | A1 | 04 September 2019 |
| | | | | EP | 3534437 | A4 | 18 March 2020 |
| | | | | EP | 3534437 | B1 | 06 January 2021 |
| | | | | JP | 2020-512669 | A | 23 April 2020 |
| | | | | JP | 7045539 | B2 | 01 April 2022 |
| | | | | KR | 10-2237952 | B1 | 08 April 2021 |
| | | | | US | 11145860 | B2 | 12 October 2021 |
| | | | | US | 2019-0267621 | A1 | 29 August 2019 |
| | | | | WO | 2019-022422 | A1 | 31 January 2019 |
| KR | 10-2021-0076147 | A | 23 June 2021 | CN | 113039669 | A | 25 June 2021 |
| | | | | EP | 3893296 | A1 | 13 October 2021 |
| | | | | EP | 3893296 | A4 | 10 August 2022 |
| | | | | JP | 7259766 | B2 | 18 April 2023 |
| | | | | KR | 10-2305491 | B1 | 27 September 2021 |
| | | | | US | 2022-0006076 | A1 | 06 January 2022 |
| | | | | WO | 2020-116160 | A1 | 11 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240003889
- KR 1020130136796

- KR 1020160111213